(19) Europäisches Patentamt
European Patent Office
Office européen des brevets

(11) EP 3 035 345 B1

(12) **EUROPEAN PATENT SPECIFICATION**

(45) Date of publication and mention of the grant of the patent:
**06.05.2020 Bulletin 2020/19**

(51) Int Cl.:
***H01B 3/44*** *(2006.01)* ***C08K 5/3475*** *(2006.01)*
***H01B 7/28*** *(2006.01)* ***B32B 15/085*** *(2006.01)*

(21) Application number: **14197899.9**

(22) Date of filing: **15.12.2014**

(54) **Layered structure with copper passivator**

Schichtstruktur mit Kupferpassivierer

Structure en couches de passivation avec du cuivre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2016 Bulletin 2016/25**

(73) Proprietor: **Borealis AG**
**1220 Vienna (AT)**

(72) Inventors:
- **Fagrell, Ola**
  **SE-444 45 Stenungsund (SE)**
- **Dahlen, Kristian**
  **44460 Stora Höga (SE)**
- **Hellström, Stefan**
  **442 42 Kungälv (SE)**

(74) Representative: **Kador & Partner PartG mbB**
**Corneliusstraße 15**
**80469 München (DE)**

(56) References cited:
**EP-B1- 1 309 632 WO-A1-2014/177153**

- **DATABASE WPI Week 197439 Thomson Scientific, London, GB; AN 1974-68421V XP002740205, & JP S49 10943 A (FURUKAWA ELECTRIC CO LTD) 30 January 1974 (1974-01-30)**
- **DATABASE WPI Week 201401 Thomson Scientific, London, GB; AN 2013-J68331 XP002740206, & CN 102 969 048 A (JIANGSU YUANYANG DONGZE CABLE GROUP CO L) 13 March 2013 (2013-03-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of Invention

The present invention relates to a cable comprising a copper conductor and a polymer layer adjacent to the copper conductor, more specific to a wire or cable insulation layer that can preserve the copper conductor from discolouration. The polymer layer adjacent to the copper conductor comprises a polymer composition comprising a polymer of ethylene, which comprises a comonomer with silane groups containing units that are hydrolysable, and a benzotriazole compound. This prevents discoloration of the copper conductor.

### Background of Invention

A typical electrical power cable or wire generally comprises one or more conductors in a cable core, which is surrounded by one or more insulation layers or sheaths of polymeric material. The core typically is copper or aluminium, surrounded by a number of different polymeric layers, each serving a specific function, e.g. semiconducting layer (shielding layer), insulation layer, metallic tape shield layer and polymeric jacket. Each layer can provide more than one function., A low voltage wire or cable are often surrounded by a single polymeric layer that serves as insulating, a metallic shield and polymeric jacketing layer. A medium to extra-high voltage cable may for example be surrounded by a first polymeric semiconducting layer, a polymeric insulating layer, a second polymeric semiconducting layer, a metallic tape shield, and a polymeric jacket.

A wide variety of polymeric materials have been utilized as electrical insulating and semiconducting materials for power cables. Such polymeric materials in addition to having suitable dielectric properties must also be enduring and must substantially retain their initial properties for effective and safe performance over many years of service. Such materials have also to meet stringent safety requirements as laid down in international standards.

Power cables typically use stranded copper or aluminium conductors, although small power cables may use solid conductors.

Despite competition from other materials, copper remains the preferred electrical conductor in many electrical cable constructions with the major exception being overhead electric power transmission where aluminium is often preferred. Copper wire is used in power generation, power transmission, power distribution, telecommunications, electronics circuitry, and countless types of electrical equipment. Electrical wiring is the most important market for the copper industry. This includes building wire, communications cable, power distribution cable, appliance wire, automotive wire and cable, and magnet wire. Roughly half of all copper mined is used to manufacture electrical wire and cable conductors. Many electrical devices rely on copper wiring because of its multitude of inherent beneficial properties, such as its high electrical conductivity, tensile strength, ductility, creep (deformation) resistance, corrosion resistance, low thermal expansion, high thermal conductivity, solderability, and ease of installation.

Copper slowly react with atmospheric oxygen to forming a layer of brown-black copper oxide which, unlike the rust which forms when iron is exposed to moist air, protects the underlying copper from more extensive corrosion. A green layer of verdigris (copper carbonate) can often be seen on old copper constructions. Further is copper sensitive to sulphur containing substances that contribute to discoloration as well as fingerprints, since perspiration is corrosive.

Discolouration of the copper conductor is a common problem. This impairs the esthetical properties of the copper conductor. When connecting copper conductor are the polymeric layers removed in order to get an undiscoloured part of the copper conductor. Many copper conductors are installed underground in presence of water that increases the discolouration.

US6262151 disclose the use of phenolic derivate including a benzotriazole group as UV absorbing agent for polyolefines.

Benzotriazole compound (including its derivates) reduce Copper discolouration on the Copper surface. It is sold for that purpose. If benzotriazole compound is applied onto a copper surface it will protect the surface from discolouration. It will form a protective benzotriazole-copper polymeric network. The protective layer will physically protect the copper from discolouration. The copper conductor can easily be scratched and the protective surface of benzotriazole compound be destroyed with a resulting of discoloured surface. This can happen when the cable insulation is extruded onto the copper conductor or during installation or use of the cable. Commonly are copper passivators e.g. benzotriazole compound added to the copper conductor drawing oil prior to cable extrusion, thereby forming a thin layer of copper passivator on the copper conductor surface. This method does however not lead to a satisfactory protection against copper discolouration when copper conductor comes in contact with moisture after cable extrusion.

Benzotriazole compound and its derivate are commonly used in insulation oils for transformators. It works as a corrosion inhibitor and protects the copper. There is a positive correlation between the thickness of the copper passivator layer and the efficiency of preventing corrosion.

WO2014/177153 A1 discloses a electrical cable in particular for low voltage applications. The electrical cable

comprises at least one conductive wire surrounded by an insulation, wherein the insulation is of a thermoplastic material comprising - at least about 0.01 % by weight of component A selected from oligomeric hindered amines of the HALS type having a molecular weight of from about 500 to about 3400; - at least about 0.01 % by weight of component B selected from UV stabilizers comprising at least one sebacate moiety substituted with at least one R1 and optionally R2, where R1 means 1,2,2,6,6-pentamethyl-4-piperidinyl or 2,2,6,6-tetramethyl-4-piperidinyl and R2 means methyl or 1,2,2,6,6- pentamethyl-4-piperidinyl; - at least about 0.01 % by weight of component C selected from hindered phenolics comprising a benzotriazole moiety and having a molecular weight of from about 200 to about 500 and - at least about 0.1 % by weight of a calcium carbonate source.

Furthermore, a cable sheathing composition is already known that contains 100 parts resin and 0.05-10 parts inorganic porous material containing volatile Cu corrosion inhibitor (DATABASE WPI Week 197439, Thomson Scientific, London, GB; AN 1974-68421V & JP S49 10943 A (FURUKAWA ELECTRIC CO LTD) 30 January 1974 (1974-01-30)).

Moreover, a marine independent screening instrument cable has already been disclosed. It is prepared by extruding whitening and UV-resisting ethylene propylene rubber insulation layers at peripheries of tin-plated annealed stranded copper conductors to form insulation wire cores (DATABASE WPI Week 201401, Thomson Scientific, London, GB; AN 2013-J68331 & CN 102 969 948 A (JIANGSU YUANYANG DONGZE CABLE GROUP CO L) 13 March 2013 (2013-03-13).

EP1309632 B1 is directed to a highly active condensation catalyst suitable for the crosslinking of alkoxysilanyl polyolefins, e.g., silane functional polyethylene, selected from the group consisting of: (i) an alkylated aryl disulfonic acid selected from the group consisting of structure (I) and structure (II), wherein each of R1 and R2 is the same or different and is a linear or branched alkyl group with 6 to 16 carbons, y is 0 to 3, z is 0 to 3 with the proviso that y+z is 1 to 4, X is a divalent moiety selected from the group consisting of -C(R3)(R4)-, wherein each of R3 and R4 is H or independently a linear or branched alkyl group of 1-4 carbons and n is 1; -C(=O)-, wherein n is 1, -O- wherein n is 1; -S-, wherein n is 1 to 3; and -S(O)2-, wherein n is 1; (ii) a derivative of (i) selected from the group consisting of the anhydrides, esters, epoxy blocked sulfonic acid esters, acetylates, and amine salts thereof which is hydrolyzable to the alkylated aryl disulfonic acid.

**Brief Summary of invention**

The invention is a cable comprising a copper conductor and a polymer layer adjacent to the copper conductor, wherein the polymer layer comprises a polymer composition comprising a polymer of ethylene, which comprises a comonomer with silane groups containing units that are hydrolysable, and a benzotriazole compound.

A conductor can carry electricity along its length. It can be a power or signal current. Polymers are defined to have more than at least 1000 repeating units.

It has surprisingly been found that a polymer layer, comprising of a polymer composition which comprises a polymer of ethylene, which comprises a comonomer with silane groups containing units that are hydrolysable, and the benzotriazole compound, adjacent to a copper conductor, will form a protective layer on the copper conductor and prevent discolouration of the copper conductor. Instead of applying the benzotriazole compound first on the copper conductor surface and thereby risking to scratch or damage the surface during applying the adjacent polymer layer, the benzotriazole compound, which is present in the polymer composition of the invention, surprisingly migrates from the polymer composition to the surface of the copper conductor and forms a protective layer after the copper conductor is covered by the polymer layer comprising the polymer composition comprising the benzotriazole compound. Some unreacted benzotriazole compound will remain in the polymer layer and will migrate when needed. The polymer layer will work as a reservoir for the benzotriazole compound, which prolong the discolouration effect compared to applying it directly onto the copper conductor surface. The protective layer will be self-healing and the polymer layer will work as a reservoir.

The benzotriazole is a compound with an active site of benzotriazole. It can be substituted or non-substituted. Polymer layer means that the conductor is partly sheeted or more suitably surrounding the conductor, i.e. the conductor is coated with a polymer layer. The polymer layer can be an insulation layer, a semiconducting layer, a combined insulation and jacketing layer. The decisive is that the polymer layer shall be adjacent to the conductor, i.e. in direct contact. The polymer layer suitably is an insulation layer or a combined insulation and jacketing layer, most suitably only an insulation layer. The insulation layer can be used in many applications that include copper conductors, most suitably in a cable.

The cable of the invention comprises a copper conductor and a polymer layer adjacent to the copper conductor, wherein the polymer layer comprises a polymer composition comprising the polymer of ethylene, which comprises a comonomer with silane groups containing units that are hydrolysable, and the benzotriazole compound. Suitably the polymer layer of the cable is an insulation layer, a semiconducting layer, jacketing layer or a combined insulation and jacketing layer more suitably an insulation layer or a combined insulation and jacketing layer. Most suitably the polymer layer is an insulation layer which is suitably covered with a jacketing layer.

**The detailed descriptionof the invention**

The benzotriazole compound can be substituted or unsubstituted, and is suitably a compound of formula (I) (hereinafter benzotriazole compound):

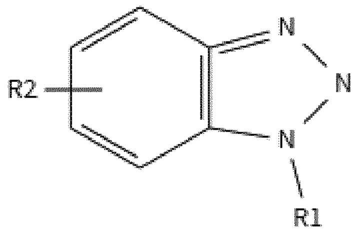

(I) wherein

R1 is a hydrogen atom, an alkyl group comprising at least 6 carbon atoms, suitably at least 12 carbon atoms, and suitably less than 100 carbon atoms, more suitably from 12 to 100 carbon atoms, or an alkyl group comprising at least one amine group, and
R2 is a hydrogen atom or an alkyl group, suitably a methyl group.

By substituting the benzotriazole compound the balance between exudation and compability between the polymer composition and the benzotriazole compound can be controlled. Improved solubility of the benzotriazole compound means that a higher loading of benzotriazole compound can be added into the polymer composition.
Examples of commercial benzotriazole compounds are Irgamet 30, Irgamet 39, Irgamet 42, Irgamet BTA, Irgamet BTZ & Irgamet TTZ supplied by Basell.
In a further embodiment the benzotriazole compound is substituted with at least one amine. Suitably the benzotriazole compound is Irgamet 39, which is a mixture of 2 isomers: N,N-bis(2-ethylehexyl)-4-methyl-1H-benzotriazol-1-methylammine (CAS no: 80584-90-3) and N,N-bis(2-ethylehexyl)-5-methyl-1H-benzotriazol-1-methylamine (CAS no: 80595-74-0).
In one embodiment the amount of benzotriazole compound in the polymer composition is from 50ppm to 1000ppm, suitably 50ppm to 500ppm or more suitably 100 ppm to 400ppm.
The polymer composition comprises a polymer of ethylene. The polymer of ethylene is suitably at least 70wt% or more suitably more than 90wt% of the polymer composition. The polymer of ethylene suitably has an $MFR_2$ of 0.1 to 40 g/10min, suitably 0.5 to 15 g/10min and most suitably 0.75 to 4 g/10min.
The definition of polymer of ethylene is a polymer with more than 50wt% of ethylene monomer, suitably more than 90wt% of ethylene monomer. The polymer of ethylene can further comprise of alfa-olefines and comonomers with vinyl groups and functional groups such as polar comonomers.
The polymer of ethylene comprises a comonomer with silane groups containing units that are hydrolysable.
Silane groups that are hydrolysable mean that a silanol condensation reaction can form covalent bonds with other silane groups. The silane groups can make covalent bonds with other silane groups of the polymer of ethylene with a comonomer with silane groups containing units and form a network. The network degree can for example be measured by gel content or hot set.
The polymer of ethylene with silane groups containing units suitably has silane content of 0.1 to 10 wt%, suitably 1 to 5 wt% 20 and most suitably 1.5 to 3 wt%.
The polymer of ethylene with silane groups containing units can be made by several conventional processes. The silane is hydrolysable, i.e. crosslinkable. The hydrolysable silane groups may be introduced into the polymer of ethylene by copolymerisation of e.g. ethylene monomers with silane group containing comonomer(s) or by grafting, i.e. by chemical modification of the polymer of ethylene by addition of silane groups mostly in a radical reaction, as well known in the art. Benefits of copolymerisation are that no polar peroxide residues or unreacted vinyl silanes are present in the final article. This will make the final product more uniform, better consistency and improve quality. Storage stability of the copolymerised ethylene with vinyl triethoxy silane and/or vinyl trimethoxy silane made in a high pressure radical process is greatly improved compared to grafted solutions. Another benefit is less handling liquid vinyl silanes which are flammable and have a strong odour. Further benefits are less scrape, less scorch (premature crosslinking in extruder) and longer production runs (less cleaning of extruders). Copolymerisation is the preferred production process of the polymer of ethylene with silane groups containing units. The amount of silane groups can be decreased compared to grafting. The reason for this is that all silane groups are copolymerised while grafted polymer usually contains unreacted silane with peroxide residues. The polymer of ethylene with silane groups containing units is suitably a low density

polymer of ethylene containing silane groups containing units.

The polymer of ethylene of the invention is produced by polymerising ethylene suitably with a comonomer with silane groups containing units as defined above in a high pressure (HP) radical polymerisation process using free radical polymerization in the presence of one or more initiator(s) and optionally using a chain transfer agent (CTA) to control the MFR of the polymer.

The HP reactor can be e.g. a well-known tubular or autoclave reactor or a mixture thereof, suitably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. The high pressure polymerization is generally performed at pressures of 100 to 400 MPa and at temperatures of 80 to 350 °C. Such processes are well known and well documented in the literature.

The incorporation of the comonomer with silane groups containing units (as well as optional other comonomer(s)) and the control of the comonomer feed to obtain the desired final content of said (hydrolysable) comonomer with silane groups containing units can be carried out in a well-known manner and is within the skills of a skilled person.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The silane groups containing comonomer for copolymerising silane groups or the silane groups containing compound for grafting silane groups to produce polymer of ethylene is suitably a vinyl silane compound represented by the formula:

$$R^1SiR^2_qY_{3-q} \qquad (II)$$

wherein

$R^1$ is an ethylenically unsaturated hydrocarbyl, hydrocarbyloxy or (meth)acryloxy hydrocarbyl group, each $R^2$ is independently an aliphatic saturated hydrocarbyl group, Y which may be the same or different, is a hydrolysable organic group and q is 0, 1 or 2.

Special examples of the unsaturated silane compound are those wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and $R^2$, if present, is a methyl, ethyl, propyl, decyl or phenyl group. Most suitable is vinyl triethoxysilane (VTES) or vinyl trimethoxy silane (VTMS).

One embodiment of the invention is copolymerising the ethylene monomer with vinyl triethoxy silane or vinyl trimethoxy silane comonomer in a high pressure radical process to produce the copolymer of ethylene with a copolymer with silane groups containing units.

The polymer of ethylene with silane groups containing units may contain further comonomer(s) which are other than silane groups containing comonomer. Moreover, the polymer of ethylene with silane groups containing units may contain further polar groups other than silane groups (referred herein as polar groups). In one embodiment the polymer of ethylene with silane groups containing units contains also polar groups, which may be introduced by grafting a polar groups containing compound or by copolymerising a polar groups containing comonomer (herein referred as polar comonomer). In this embodiment, the polymer of ethylene is produced by polymerising ethylene monomer with silane groups containing comonomer and with at least one, suitably one, polar comonomer.

In one embodiment the polymer of ethylene with silane groups containing units is selected from a polymer consisting of ethylene monomer, silane groups containing comonomer and one or more, suitably one, polar comonomer. Typical polar comonomers are a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maelic acid and fumaric acid, (d) (meth)acrylic acid derivatives, such as (meth)acrylonitrile and (meth)acrylic amide, and (e) vinyl ethers, such as vinyl methyl ether and vinyl phenyl ether. The polymer of ethylene is produced by a high pressure polymerisation with free radical initiation.

Typical polar comonomers can be hydroxyl group(s), alkoxy group(s), carbonyl group(s), carboxyl group(s), ether group(s) or ester group(s), or a mixture thereof, can be used. More suitably, polar comonomer(s) containing carboxyl and/or ester group(s) can be used as said polar comonomer. Still more suitably the polar comonomer(s) is selected from the groups of acrylate(s), methacrylate(s) or acetate(s), or any mixtures thereof. Even more suitably selected from the group of alkyl acrylates, alkyl methacrylates or vinyl acetate, or a mixture thereof. Further preferably, said optional polar comonomers can be selected from C1- to C6-alkyl acrylates, C1- to C6-alkyl methacrylates or vinyl acetate.

Especially suitable polar comonomers are vinyl acetate (EVA), methyl (meth)acrylate, (EMA & EMMA), ethyl acrylate (EEA), and/or butyl acrylate (EBA), most suitably from EBA, EMA and EEA. Two or more such olefinically unsaturated

compounds may be used in combination. The term "(meth)acrylic acid" is intended to embrace both acrylic acid and methacrylic acid. The copolymer ethylene is produced by a high pressure polymerisation with free radical initiation.

In one embodiment of the invention the polymer layer is an insulation layer crosslinked by a condensation reaction of the polymer of ethylene with a comonomer with silane groups containing units. Suitably condensation reaction is catalysed by a condensation reaction catalyst. Typical cables with the insulation layer adjacent to the copper conductor are commonly thin and used in applications exposed to weather and wind. The cables are crosslinked to withstand the demanding environment. A protective self-healing layer of benzotriazole compound is especially suitable for such cables.

The condensation reaction catalyst is suitably selected from carboxylates of metals, such as tin, zinc, iron, lead and cobalt; from a titanium compound bearing a group hydrolysable to a Brönsted acid, from organic bases; from inorganic acids; and from organic acids; more suitably from carboxylates of metals, such as tin, zinc, iron, lead and cobalt, from titanium compound bearing a group hydrolysable to a Brönsted acid as defined above or from organic acids. The condensation reaction catalyst is suitably acidic, more suitably a Brönsted acid. In an even more suitable embodiment the condensation reaction catalyst is a sulphonic acid, even more suitable an aromatic organic sulphonic acid, which is an organic sulphonic acid which comprises the structural element:

$$Ar(SO3H)x \qquad (III)$$

wherein

Ar is an aryl group which may be substituted or non-substituted, and if substituted, then suitably with at least one hydrocarbyl group up to 50 carbon atoms, and x is at least 1; or a precursor of the sulphonic acid of formula (III) including an acid anhydride thereof or a sulphonic acid of formula (III) that has been provided with a hydrolysable protective groups, e.g. an acetyl group that is removable by hydrolysis. Such organic sulphonic acids are described e.g. in EP736065, or alternatively, in EP1309631, EP1309632.

In one embodiment the condensation reaction catalyst is an aromatic sulphonic acid, more suitably the aromatic organic sulphonic acid of formula (III). Said sulphonic acid of formula (III) as the condensation reaction catalyst may comprise the structural unit according to formula (III) one or several times, e.g. two or three times (as a repeating unit (II)). For example, two structural units according to formula (III) may be linked to each other via a bridging group such as an alkylene group. Suitably the organic aromatic sulphonic acid of formula (III) has from 6 to 200 C-atoms, more suitably from 7 to 100 C-atoms.

Suitably x is 1, 2 or 3, and more suitably x is 1 or 2. Most suitably, Ar is a phenyl group, a naphthalene group or an aromatic group comprising three fused rings such as phenantrene and anthracene.

Non-limiting examples of the even more suitable sulphonic acid compounds of formula (II) are p-toluene sulphonic acid, 1-naphtalene sulfonic acid, 2-naphtalene sulfonic acid, acetyl p-toluene sulfonate, acetylmethane-sulfonate, dodecyl benzene sulphonic acid, octadecanoyl-methanesulfonate and tetrapropyl benzene sulphonic acid; which each independently can be further substituted.

Even more suitable sulphonic acid of formula (III) is substituted, i.e. Ar is an aryl group which is substituted with at least one C1 to C30-hydrocarbyl group. In this more suitable subgroup of the sulphonic acid of formula (III), it is furthermore suitable that Ar is a phenyl group and x is at least one (i.e. phenyl is substituted with at least one -S(=O)2OH), more suitably x is 1, 2 or 3; and more suitably x is 1 or 2 and Ar is phenyl which is substituted with at least one C3-20-hydrocarbyl group. Most suitable sulphonic acid (III) as the condensation reaction catalyst is tetrapropyl benzene sulphonic acid and dodecyl benzene sulphonic acid, more suitably dodecyl benzene sulphonic acid.

The amount of the condensation reaction catalyst is typically 0.00001 to 0.1 mol/kg polymer composition suitably 0.0001 to 0.01 mol/kg polymer composition, more suitably 0.0005 to 0.005 mol/kg polymer composition. The choice of the condensation reaction catalyst and the feasible amount thereof depends on the end application and is well within the skills of a skilled person.

In one embedment the cable comprising the polymer layer is an insulation layer comprising the polymer composition. The polymer composition is suitably crosslinked by condensation reaction, suitably with a condensation reaction catalyst as in any above described embodiments. The hotset of the crosslinked polymer composition is suitably less than 175% after 7 days ambient condition, RH50, more suitably less than 100%. The hot set is measured as described in in the test methods. One object of the invention is good discolouration properties while maintaining good crosslinking properties, even for acidic condensation reaction catalyst such as sulphonic acids.

In one embodiment the condensation reaction is carried out using a condensation reaction catalyst which is acidic, or more suitable sulphonic acid, the amount of benzotriazole compound in the polymer composition is suitably from 50ppm to 500ppm in the polymer composition, more suitably 50ppm to 400ppm or most suitably 100 ppm to 300ppm. It is surprising that such good crosslinking properties can be maintained with such high loading of the benzotriazole compound due to its basic nature.

The polymer composition may contain further component(s), such as further polymer component(s), like miscible thermoplastic(s); additive(s), such as antioxidant(s), further stabilizer(s), e.g. water treeing retardant(s); lubricant(s),

foaming agent(s) or colorant(s); filler(s), such as conductive filler.
The total amount of further polymer component(s), if present, is typically up to 30 wt%, suitably up 20 wt%, suitably up 10 wt %, more suitably from 0.5 to 7 wt%, based on the total amount of the polymer composition.

The total amount of additive(s), if present, is generally from 0.01 to 10 wt%, suitably from 0.05 to 7 wt%, more suitably from 0.2 to 5 wt%, based on the total amount of the polymer composition.
Suitably the polymer composition comprises, suitably consists of, a polyolefin, a benzotriazole compound of formula (I) and optionally, and suitably, further additives.
Suitably the benzotriazole compound is added to the polymer composition in a form of a Master Batch (MB), which comprises the benzotriazole compound together with a carrier medium. Alternatively, the benzotriazole compound can be soaked into the polymer composition or in the condensation reaction catalyst master batch. More suitably the benzotriazole compound is added as master batch, since this make dosing more accurate. This reduces the risk of overdosing and consequently reduces risk for impairing crosslinking. Suitably the benzotriazole compound is added in the condensation reaction catalyst master batch.
In one embodiment of the invention the insulation layer is covered with a jacketing layer. Such layer is a sheeting layer that covers and protects the insulation layer mechanically. The object of such layer are to be tough and resistant to mechanical damage, both short term during installation and long term after installation.

Suitably, the cable is a power cable, more suitable the cable is a low voltage (LV) or medium voltage (MV) power cable, most suitably a low voltage power cable. Power cable is defined to be a cable transferring energy operating at any voltage level. LV power cable typically operates at voltages of below 6 kV, typically above 400V. MV power cables operate at higher voltage levels and in different applications than LV cables. A typical MV power cable usually operates at voltages from 6 to 36 kV. LV power cable and in some embodiment medium voltage (MV) power cables comprises an electric conductor which is coated with an insulation layer or a combined insulation and jacketing layer, suitable an insulation layer. Typically MV power cables comprise of a conductor surrounded at least by an inner semiconductive layer, an insulation layer and an outer semiconductive layer, in that order. Suitably the cable insulation is extruded on the copper conductor.

The invention further relates to a process for passivating a copper conductor of a cable by migration, wherein the process comprises the steps of producing a cable layer according to any previous embodiments for adding a copper passivator in a cable, suitably an insulation layer. The copper conductor should suitably be cleaned. The polymer composition should be applied directly on copper conductor, suitably by extrusion. The copper passivator migrates from the insulation layer onto the copper conductor. Copper passivator is an additive that prevents the degradation of copper, i.e. discolouration. The passivator is forming a polymeric layer on the surface of and thereby protects the copper from degradation. Suitably the copper passivator is a benzotriazole compound as described in any embodiment above.

**Test methods**

a) Melt Flow Rate
The melt flow rate $MFR_2$ was measured in accordance with ISO 1133 at 190°C and a load of 2.16 kg for ethylene homo and copolymers.
b) Density: The density was measured according to ISO 1183D and ISO1872-2 for sample preparation.
c) The content (wt% and mol%) of polar comonomer present in the polymer and the content (wt% and mol%) of silane groups containing units (preferably comonomer) present in the polymer composition (preferably in the polymer):
Quantitative nuclear-magnetic resonance (NMR) spectroscopy was used to quantify the comonomer content of the polymer in the polymer composition.

Quantitative 1H NMR spectra recorded in the solution-state using a Bruker Advance III 400 NMR spectrometer operating at 400.15 MHz. All spectra were recorded using a standard broad-band inverse 5 mm probehead at 100°C using nitrogen gas for all pneumatics. Approximately 200 mg of material was dissolved in 1,2-tetrachloroethane-d2 (TCE-d2) using ditertiarybutylhydroxytoluen (BHT) (CAS 128-37-0) as stabiliser. Standard single-pulse excitation was employed utilising a 30 degree pulse, a relaxation delay of 3 s and no sample rotation. A total of 16 transients were acquired per spectra using 2 dummy scans. A total of 32k data points were collected per FID with a dwell time of 60 μs, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methylacrylate and vinyltrimethylsiloxane copolymerisation when present in the same polymer.

Quantitative 1H NMR spectra were processed, integrated and quantitative properties determined using custom

spectral analysis automation programs. All chemical shifts were internally referenced to the residual protonated solvent signal at 5.95 ppm. When present characteristic signals resulting from the incorporation of vinylacytate (VA), methyl acrylate (MA), butylacrylate (BA) and vinyltrimethylsiloxane (VTMS), in various comonomer sequences, were observed (Randell89). All comonomer contents calculated with respect to all other monomers present in the polymer.

The vinylacytate (VA) incorporation was quantified using the integral of the signal at 4.84 ppm assigned to the *VA sites, accounting for the number of reporting nuclie per comonomer and correcting for the overlap of the OH protons from BHT when present:

$$VA =( I^*VA – (IArBHT)/2) / 1$$

The methylacrylate (MA) incorporation was quantified using the integral of the signal at 3.65 ppm assigned to the 1MA sites, accounting for the number of reporting nuclie per comonomer:

$$MA = I1MA / 3$$

The butylacrylate (BA) incorporation was quantified using the integral of the signal at 4.08 ppm assigned to the 4BA sites, accounting for the number of reporting nuclie per comonomer:

$$BA = I4BA / 2$$

The vinyltrimethylsiloxane incorporation was quantified using the integral of the signal at 3.56 ppm assigned to the 1VTMS sites, accounting for the number of reporting nuclei per comonomer:

$$VTMS = I1VTMS / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$BHT = IArBHT / 2$$

The ethylene comonomer content was quantified using the integral of the bulk aliphatic (bulk) signal between 0.00 - 3.00 ppm. This integral may include the 1VA (3) and $\alpha$VA (2) sites from isolated vinylacetate incorporation, *MA and $\alpha$MA sites from isolated methylacrylate incorporation, 1BA (3), 2BA (2), 3BA (2), *BA (1) and $\alpha$BA (2) sites from isolated butylacrylate incorporation, the *VTMS and $\alpha$VTMS sites from isolated vinylsilane incorporation and the aliphatic sites from BHT as well as the sites from polyethylene sequences. The total ethylene comonomer content was calculated based on the bulk integral and compensating for the observed comonomer sequences and BHT:

$$E = (1/4)*[ Ibulk - 5*VA - 3*MA - 10*BA - 3*VTMS - 21*BHT ]$$

It should be noted that half of the $\alpha$ signals in the bulk signal represent ethylene and not comonomer and that an insignificant error is introduced due to the inability to compensate for the two saturated chain ends (S) without associated branch sites. The total mole fractions of a given monomer (M) in the polymer was calculated as:

$$fM = M / ( E + VA+ MA + BA + VTMS )$$

The total comonomer incorporation of a given monomer (M) in mole percent was calculated from the mole fractions in the standard manner:

$$M [mol\%] = 100 * fM$$

The total comonomer incorporation of a given monomer (M) in weight percent (wt%) was calculated from the mole fractions and molecular weight of the monomer (MW) in the standard manner:

$$M [wt\%] = 100 * ( fM * MW) / ( (fVA * 86.09) + (fMA * 86.09) + (fBA * 128.17) + (fVTMS * 148.23) + ((1\text{-}fVA\text{-}fMA\text{-}fBA\text{-}fVTMS) * 28.05) )$$

randall89
J. Randall, Macromol. Sci., Rev. Macromol. Chem. Phys. 1989, C29, 201.

It is evident for a skilled person that the above principle can be adapted similarly to quantify content of any further polar comonomer(s) which is other than MA BA and VA, if within the definition of the polar comonomer as given in the present application, and to quantify content of any further silane groups containing units which is other than VTMS, if within the definition of silane groups containing units as given in the present application, by using the integral of the respective characteristic signal.

d) Gel content (wt%): is measured according to ASTM D2765-90 using a sample consisting of said silane-crosslinked polyolefin polymer composition of the invention (Method A, decaline extraction). Ambient condition is 23°C, 50% room humidity (RH). The RH at 50°C to 100°C was about 10%, if not otherwise specified.

e) Hot set elongation

Tape preparation: the mixtures are extruded at 190°C. Then, cross-linking is performed in a water bath at temperatures of 90°C for 24 hours. After, the samples are placed in a constant room set up at 23°C and 50% humidity for 24 h (defined as ambient condition). Then tapes of desired length are cut out.

The above described tapes are used to determine the hot set properties. Three dumb-bells samples, taken out along extrusion direction are prepared according to ISO527 5A from the 1.8 +/- 0.1 mm thick crosslinked tape. The hot set tests are made according to EN60811-2-1 (hot set test) by measuring the thermal deformation. Reference lines are marked 20 mm apart on the dumb-bells. Each test sample is fixed vertically from upper end thereof in the oven and the load of 0.2 MPa is attached to the lower end of each test sample. After 15 min, 200°C in oven the distance between the pre-marked lines is measured and the percentage hot set elongation calculated, elongation %. For permanent set %, the tensile force (weight) is removed from the test samples and after, recovered in 200°C for 5 minutes and then let to cool at room temperature.

The permanent set % reported in Table 3 is calculated from the distance between the marked lines. The average of the three tests is reported.

**Materials**

LE4423, VTMS-ethylene copolymer is made in a high pressure radical process, where ethylene monomers were reacted with vinyl trimethoxy silane (VTMS) amounts so as to yield 1.35 wt% silane content in the copolymer. The $MFR_2$ is 1g/10 min. LE4423 is described in EP2562768.

CatMB SA, Condensation reaction catalyst master batch with a carrier of low density polymer of ethylene ($MFR_2$ is 7.5g/10 min) containing 1.5 wt% dodecyl benzene sulphonic acid as condensation reaction catalyst and 2% Irganox 1010 as stabiliser was dry blended into the silane copolymers.

CATMB SB, Condensation reaction catalyst master batch with a carrier of low density polymer of ethylene ($MFR_2$ is 7.5g/10 min) containing 4 wt% Nacure CD-2180, supplied by King Industries as condensation reaction catalyst and 2% Irganox 1010 as stabiliser was dry blended into the silane copolymers.

CATMB Tin, Condensation reaction catalyst master batch with a carrier of low density polymer of ethylene ($MFR_2$ is 7.5g/10 min) containing 3 wt% dioctyl tin dilaurate DOTL as condensation reaction catalyst and 2% Irganox 1010 as stabiliser was dry blended into the silane copolymers.

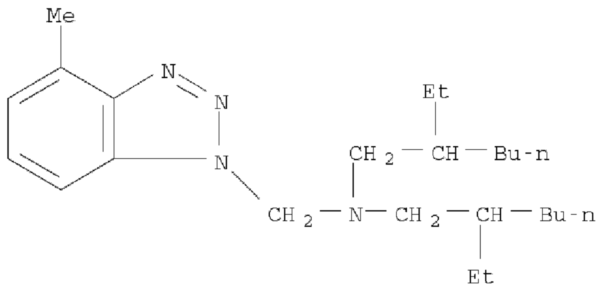

Irgamet 39 supplied by Basell, Cas 80584-90-3

**Sample preparation**

Prior to extrusion the copper conductors were cleaned with a cloth soaked in isopropanol. The appearance of the copper conductor surface was shiny without any defects or discolouration. The insulations were extruded onto stranded copper conductors on a mini cable line using a temperature profile of 150°C/160°C/170°C and 50 rpm. The diameter of the copper conductor was 5 mm and the insulation layer thickness was 0.7 mm. Furthermore, the copper conductor was preheated to 110°C prior to extrusion.

All examples have 5wt% of condensation reaction catalyst master batch (CatMB) and 95wt% of LE4423. The Irgamet 39 was added in the CatMB. The final amount of Irgamet 39 in the polymer composition is indicated in each example.

The cables were inspected after treatment in 90°C waterbath for 24h by peeling of ~5 cm of the insulation. In general there was some discoloration visible after treatment in hot waterbath. After treatment in ambient conditions for 24h (23°C, 50% RH) there was no sign of discolouration for any of the samples.

Table 1, Discoloration appearance of copper conductor

| Rating | Appearance | Comment |
|---|---|---|
| 1 | Dark discolouration | The copper has a dark skin |
| 2 | Clearly discoloured | |
| 3 | Slight discolouration | Grey clearly visible skin covering most of copper conductor |
| 4 | Faint discolouration | Some grey spots |
| 5 | Shiny copper | Nothing |

Table 2, Copper discolouration on cables after 90°C waterbath for 24 h

| **Sample** | **Irgamet 39 content** | **Rating** |
|---|---|---|
| Naked Wire | | 5 |
| LE4423 | 0 ppm | 3 |
| LE4423 + CATMB Tin | 600 ppm | 5 |
| LE4423 + CATMB Tin | 0 ppm | 3 |
| LE4423 + CatMB SA | 0 ppm | 3 |
| LE4423 + CatMB SB | 0 ppm | 3 |
| LE4423 + Cat MB SA | 600 ppm | 4 |
| LE4423 + CatMB SB | 600 ppm | 4 |
| LE4423 + Cat MB SA | 200 ppm | 4 |
| LE4423 + Cat MB SB | 200 ppm | 4 |

From Table 2 it can be seen that addition of the copper passivator Irgamet 39 will reduce the copper conductor discolouration after treatment in hot waterbath. The same rating for copper discolouration was obtained both for 200 ppm and 600 ppm total concentration of Irgamet 39 in the insulation. Addition of Irgamet 39 to a tin-catalysed system works very well in terms of reducing copper discolouration. This is due to minor or no interaction between the copper passivator and the tin condensation reaction catalyst. Further is it seen that that Irgamet 39 maintains its copper passivating properties even after addition to a strong acid condensation reaction catalyst, such a sulphonic acid, which will interact with the alkaline copper passivator.

**Table 3.** Hotset results on cables with 600ppm Irgamet 39.

| Hotset | LE4423 + CatMB SA | LE4423 + CatMB SB | LE4423 + Cat MB SA with 600ppm Irgamet 39 | LE4423 + Cat MB SB with 600ppm Irgamet 39 |
|---|---|---|---|---|
| 24h, 90°C water-bath | 57% | 21% | 50% | 22% (2min) Snap Break |
| 7days, ambient | 51% | 74% | Strain Break | 157% |
| 14days, ambient | 55% | 61% | Strain Break | 73% (2min) Snap Break |

In Table 3 it can be seen that addition of 600 ppm Irgamet 39 to the current condensation reaction catalyst concentration fails to give sufficient crosslinking reactions in ambient conditions. When lowering the concentration of Irgamet 39 to 200 ppm, satisfactory crosslinking is achieved in ambient conditions as is shown in Table 4.

**Table 4.** Hotset results on cables.

| Hotset | LE4423 + CatMB SA | LE4423 + CatMB SB | LE4423 + Cat MB SA with 200ppm Irgamet 39 | LE4423 + Cat MB SB with 200ppm Irgamet 39 |
|---|---|---|---|---|
| **24h 90°C waterbath** | 57% | 21% | 31% | 38% |
| **7d ambient** | 51% | 74% | Snap Break | 52% (2min) Snap Break |
| **14d ambient** | 55% | 61% | Snap Break | 63% |
| **Gel content after 24h waterbath 90°C** | 72% | | 70% | 77% |
| **Gel content after 4 weeks ambient** | 70% | | 60% | 69% |

To conclude on the ambient crosslinking adding 200 ppm Irgamet 39 to a sulphonic acid based condensation reaction catalyst, also gel content measurements are presented in Table 4. The results clearly show that sufficient crosslinking levels are achieved both after treatment in hot waterbath and ambient conditions.

Pellets of Cat MB SA with 4000ppm Irgamet 39 were sealed in aluminium bag and stored in oven at 50°C for 7 days. It is evident that the Irgamet 39 has not been migrating to the pellet surfaces, since the pellets are free flowing (no sticky surface).

This enables a proper mixing of base-resin pellets and condensation reaction catalyst masterbatch pellets prior to cable extrusion.

## Claims

1. A cable comprising a copper conductor and a polymer layer adjacent to the copper conductor, wherein the polymer layer comprises a polymer composition comprising a polymer of ethylene, which comprises a comonomer with silane groups containing units that are hydrolysable, and a benzotriazole compound.

2. The cable according to claim 1 wherein the benzotriazole is a compound of formula (1)

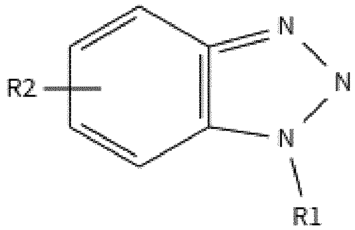

(1)

wherein R1 is an hydrogen atom, or an alkyl group comprising at least 6 carbon atoms, suitably at least 12 carbon atoms, and R2 is an hydrogen atom or an alkyl group, suitably a methyl group.

**3.** The cable according to claim 2 wherein the benzotriazole compound of formula (1) wherein R1 comprises at least one amine group.

**4.** The cable according to any of claims 1 to 3, wherein the benzotriazole compound of formula (1) is a mixture of 2 isomers: N,N-bis(2-ethylhexyl)-4-methyl-1H-benzotriazole-1-methylamine (CAS no: 80584-90-3) and N,N-bis(2-ethylhexyl)-5-methyl-1H-benzotriazole-1-methylamine (CAS no: 80595-74-0).

**5.** The cable according to any previous claims 1 to 4, wherein the benzotriazole compound of formula (1) is present in the polymer composition in an amount of from 50ppm to 500ppm.

**6.** The cable according to any of claims 1 to 5 wherein the polymer of ethylene is made in a high pressure radical polymerisation process.

**7.** The cable according to any of claims 1 to 6 wherein the polymer layer is an insulation layer comprising the polymer composition wherein the polymer composition is crosslinked by a condensation reaction of the polymer of ethylene with a comonomer with silane groups containing units.

**8.** The cable according to claim 7 wherein the condensation reaction is carried out using a condensation reaction catalyst which is acidic, suitably an aromatic sulphonic acid.

**9.** The cable according claim 7 or 8 wherein the hotset of the crosslinked polymer composition in the insulation layer is less than 175% after 7 days ambient condition, RH50.

**10.** The cable according to any previous claims 1 to 9, wherein the insulation layer is covered with a jacketing layer.

**11.** The cable according to any previous claims 1 to 10, wherein the cable is a power cable and suitably a low voltage power cable.

**12.** A process for passivating a copper conductor of a cable by migration, wherein the process comprises the steps of - producing a cable layer according to any previous claims 1 to 11.

## Patentansprüche

**1.** Kabel, das einen Kupferleiter und eine Polymerschicht, die an den Kupferleiter angrenzt, umfasst, wobei die Polymerschicht eine Polymerzusammensetzung umfasst, die ein Polymer von Ethylen, das ein Comonomer mit Silangruppen umfasst, die Einheiten umfassen, die hydrolysierbar sind, und eine Benzotriazolverbindung umfasst.

**2.** Kabel nach Anspruch 1, wobei das Benzotriazol eine Verbindung der Formel (1) ist

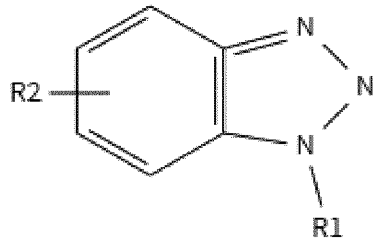

(1)

wobei R1 ein Wasserstoffatom oder eine Alkylgruppe, die mindestens 6 Kohlenstoffatome, vorzugsweise mindestens 12 Kohlenstoffatome, umfasst, und R2 ein Wasserstoffatom oder eine Alkylgruppe, vorzugsweise eine Methylgruppe, ist.

3. Kabel nach Anspruch 2, wobei die Benzotriazolverbindung der Formel (1), wobei R1 mindestens eine Amingruppe umfasst.

4. Kabel nach einem der Ansprüche 1 bis 3, wobei die Benzotriazolverbindung der Formel (1) eine Mischung aus 2 Isomeren ist: N,N-Bis(2-ethylhexyl)-4-methyl-1H-benzotriazol-1-methylamin (CAS-Nr.: 80584-90-3) und N,N-Bis(2-ethylhexyl)-5-methyl-1H-benzotriazol-1-methylamin (CAS-Nr.: 80595-74-0).

5. Kabel nach einem der vorhergehenden Ansprüche 1 bis 4, wobei die Benzotriazolverbindung der Formel (1) in der Polymerzusammensetzung in einer Menge von 50 ppm bis 500 ppm vorliegt.

6. Kabel nach einem der Ansprüche 1 bis 5, wobei das Polymer von Ethylen in einem radikalischen Hochdruckpolymerisationsverfahren hergestellt ist.

7. Kabel nach einem der Ansprüche 1 bis 6, wobei die Polymerschicht eine Isolierschicht ist, die die Polymerzusammensetzung umfasst, wobei die Polymerzusammensetzung durch eine Kondensationsreaktion des Polymers von Ethylen mit einem Comonomer mit silangruppenhaltigen Einheiten vernetzt ist.

8. Kabel nach Anspruch 7, wobei die Kondensationsreaktion unter Verwendung eines Kondensationsreaktionskatalysators durchgeführt wird, der sauer, vorzugsweise eine aromatische Sulfonsäure, ist.

9. Kabel nach Anspruch 7 oder 8, wobei die Wärmedehnung (Englisch: hotset) der vernetzten Polymerzusammensetzung in der Isolierschicht nach 7 Tagen Umgebungsbedingung, RH50, weniger als 175 % beträgt.

10. Kabel nach einem der vorhergehenden Ansprüche 1 bis 9, wobei die Isolierschicht mit einer Mantelschicht bedeckt ist.

11. Kabel nach einem der vorhergehenden Ansprüche 1 bis 10, wobei das Kabel ein Energiekabel und vorzugsweise ein Niederspannungsenergiekabel ist.

12. Verfahren zum Passivieren von einem Kupferleiter eines Kabels durch Migration, wobei das Verfahren die folgenden Schritte umfasst:

- Herstellen von einer Kabelschicht nach einem der vorhergehenden Ansprüche 1 bis 11.

## Revendications

1. Câble comprenant un conducteur en cuivre et une couche de polymère adjacente au conducteur en cuivre, dans lequel la couche de polymère comprend une composition de polymère comprenant un polymère d’éthylène, qui comprend un comonomère avec des motifs contenant des groupes silane qui sont hydrolysables, et un composé benzotriazole.

2. Câble selon la revendication 1, dans lequel le benzotriazole est un composé de formule (1)

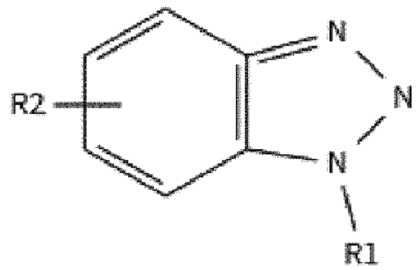

(1)

dans laquelle R1 est un atome d'hydrogène ou un groupe alkyle comprenant au moins 6 atomes de carbone, convenablement au moins 12 atomes de carbone, et R2 est un atome d'hydrogène ou un groupe alkyle, convenablement un groupe méthyle.

3. Câble selon la revendication 2, où dans le composé benzotriazole de formule (1), R1 comprend au moins un groupe amine.

4. Câble selon l'une quelconque des revendications 1 à 3, dans lequel le composé benzotriazole de formule (1) est un mélange de 2 isomères : la N,N-bis(2-éthylhexyl)-4-méthyl-1H-benzotriazole-1-méthylamine (CAS N° 80584-90-3) et la N,N-bis(2-éthylhexyl)-5-méthyl-1H-benzotriazole-1-méthylamine (CAS N° 80595-74-0).

5. Câble selon l'une quelconque des revendications 1 à 4, dans lequel le composé benzotriazole de formule (1) est présent dans la composition de polymère en une quantité de 50 ppm à 500 ppm.

6. Câble selon l'une quelconque des revendications 1 à 5, dans lequel le polymère d'éthylène est produit dans un procédé de polymérisation radicalaire haute pression.

7. Câble selon l'une quelconque des revendications 1 à 6, dans lequel la couche de polymère est une couche d'isolation comprenant la composition de polymère, laquelle composition de polymère est réticulée par une réaction de condensation du polymère d'éthylène avec un comonomère avec des motifs contenant des groupes silane.

8. Câble selon la revendication 7, dans lequel la réaction de condensation est mise en œuvre par utilisation d'un catalyseur de réaction de condensation qui est acide, convenablement d'un acide sulfonique aromatique.

9. Câble selon la revendication 7 ou 8, dans lequel le durcissement à chaud de la composition de polymère réticulée dans la couche d'isolation est inférieur à 175 % après 7 jours de conditions ambiantes, HR50.

10. Câble selon l'une quelconque des revendications 1 à 9, dans lequel la couche d'isolation est recouverte d'une couche de gainage.

11. Câble selon l'une quelconque des revendications 1 à 10, lequel câble est un câble électrique et convenablement un câble électrique basse tension.

12. Procédé pour passiver un conducteur en cuivre d'un câble par migration, lequel procédé comprend les étapes de production d'une couche de câble selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6262151 B
- WO 2014177153 A1
- JP S4910943 A
- CN 102969948 A
- EP 1309632 B1
- EP 736065 A
- EP 1309631 A
- EP 1309632 A
- EP 2562768 A


### Non-patent literature cited in the description


- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184
- *CHEMICAL ABSTRACTS,* 128-37-0
- **J. RANDALL.** *Macromol. Sci., Rev. Macromol. Chem. Phys.,* 1989, vol. C29, 201